(19) Europäisches Patentamt
European Patent Office
Office européen des brevets

(11) EP 0 818 471 A1

(12) EUROPÄISCHE PATENTANMELDUNG

(43) Veröffentlichungstag:
**14.01.1998 Patentblatt 1998/03**

(51) Int. Cl.$^6$: **C08F 2/22**, C09D 157/00

(21) Anmeldenummer: **97110747.9**

(22) Anmeldetag: **01.07.1997**

(84) Benannte Vertragsstaaten:
**AT BE CH DE DK ES FI FR GB GR IE IT LI LU MC NL PT SE**

(30) Priorität: **12.07.1996 DE 19628142**

(71) Anmelder:
**BASF AKTIENGESELLSCHAFT
67056 Ludwigshafen (DE)**

(72) Erfinder:
- **Dames, Burkhardt, Dr.
56567 Neuwied (DE)**
- **Mathauer, Klemens, Dr.
67061 Ludwigshafen (DE)**
- **Mächtle, Walter, Dr.
67067 Ludwigshafen (DE)**

# (54) Verfahren zur Herstellung von wässrigen Polymerdispersionen mit bimodaler Teilchengrössenverteilung

(57) Verfahren zur Herstellung von wäßrigen Polymerdispersionen durch Emulsionspolymerisation von radikalisch polymerisierbaren Verbindungen (Monomere), dadurch gekennzeichnet, daß während der Polymerisation der Monomeren eine Miniemulsion zugesetzt wird, wobei es sich bei der Miniemulsion um eine wäßrige, mit einer grenzflächenaktiven Substanz stabilisierten Emulsion von Monomeren mit einer Teilchengröße der emulgierten Monomertröpfchen von 10 bis 500 nm handelt, welche eine in den Monomeren der Monomertröpfchen gelöste Verbindung (Stabilisator), deren Löslichkeit in den Monomeren mindestens doppelt so groß ist, wie die Löslichkeit in Wasser, enthält.

EP 0 818 471 A1

## Beschreibung

Die Erfindung betrifft ein Verfahren zur Herstellung von wäßrigen Polymerdispersionen durch Emulsionspolymerisation. Gewünscht sind im allgemeinen Polymerdispersionen mit möglichst hohem Feststoff-, d.h. Polymergehalt, um so unnötige Kosten z.B. für den Transport oder für die Entfernung des Wassers nach der Applikation der Polymerdispersionen zu vermeiden. Für die Verwendung der Polymerdispersionen z.B. als Beschichtungs- oder Imprägnierungsmittel darf jedoch gleichzeitig die Viskosität der Dispersionen nicht zu hoch sein, damit die Polymerdispersionen einen guten Verlauf zeigen und z.B. noch eine gleichmäßige Beschichtung bei dünnen Schichtdicken möglich ist.

Es ist bekannt, daß hohe Feststoffgehalte und niedrige Viskositäten durch Zugabe von Polymerlatices während der Emulsionspolymerisation von Monomeren eingestellt werden können.

Entsprechende Verfahren sind z.B. in EP 81 083, EP-A-129 699 und EP-A-0 568 831 beschrieben.

Hohe Feststoffgehalte und niedrige Viskositäten werden bei diesen Verfahren letztlich durch eine bimodale Teilchengrößenverteilung der Polymerteilchen ermöglicht.

Nachteilig bei diesen Verfahren ist, daß der zugesetzte Polymerlatex zunächst in einem getrennten Polymerisationsprozeß hergestellt werden muß und dieser Polymerlatex dann eine Teilchengrößenverteilung aufweist, welche bestimmend ist für die Teilchengrößenverteilung bei der späteren Emulsionspolymerisation erhaltenen Polymerdispersion.

Für jede gewünschte Teilchengrößenverteilung müßte der jeweils zugehörige Polymerlatex hergestellt und bereit gehalten werden.

Aus P.L. Tang, E.D. Sudol, C.A. Silebi und M.S. El-Aasser, Journal of Applied Polymer Science, Vol 43, 1059-1066 (1991) und Vol 42, 2019-2028 (1991), sind sogenannte Miniemulsionen und ihre Polymerisation bekannt.

Bei diesen Miniemulsionen handelt es sich um Emulsionen von Monomeren, wobei in den Monomertröpfchen eine hydrophobe Verbindung gelöst ist.

Die Teilchengröße dieser Miniemulsionen hängt im wesentlichen von der Scherkraft bei der Dispergierung der Monomeren in Wasser ab.

In Miller, Sudol, Silesi und El-Aasser Macromolecules, 28, 2765-2771 (1995) wird gezeigt, daß Miniemulsionen, die Polymer in der Ölphase gelöst haben, zu bimodalen Dispersionen polymerisieren können, wenn nur ein Teil der anfangs vorhandenen Tröpfchen initiiert wird. Da sich die Tröpfchen aufgrund des gelösten Polymers nicht komplett auflösen können, schrumpfen die nichtinitiierten Tröpfchen auf Kosten der bereits wachsenden Polymerteilchen und werden später (oder gar nicht) initiiert. Das Resultat ist eine bimodale Teilchengrößenverteilung. Wird genügend Initiator verwendet, so daß alle Polymerteilchen initiiert werden, entstehen monomodale Dispersionen.

Aufgabe der vorliegenden Erfindung war ein Verfahren zur Herstellung von Polymerdispersionen, welche einen hohen Feststoffgehalt aufweisen und niedrig viskos sind. Das Verfahren sollte möglichst einfach sein und eine hohe Flexibilität bei der Herstellung von Polymerdispersionen mit unterschiedlichen Teilchengrößen erlauben.

Demgemäß wurde ein Verfahren zur Herstellung von wäßrigen Polymerdispersionen durch Emulsionspolymerisation von radikalisch polymerisierbaren Verbindungen (Monomere), dadurch gekennzeichnet, daß vor oder während der Polymerisation der Monomeren eine Miniemulsion zugesetzt wird, wobei es sich bei der Miniemulsion um eine wäßrige, mit einer grenzflächenaktiven Substanz stabilisierten Emulsion von Monomeren mit einer Teilchengröße der emulgierten Monomertröpfchen von 10 bis 500 mm handelt, welche eine in den Monomeren der Monomertröpfchen gelöste Verbindung (Co-Stabilisator), deren Löslichkeit in den Monomeren mindestens doppelt so groß ist wie die Löslichkeit in Wasser, enthält, gefunden.

Gefunden wurden auch Polymerdispersionen, die durch dieses Verfahren erhältlich sind.

Bei dem erfindungsgemäßen Verfahren unterliegt die Art der radikalisch polymerisierbaren Verbindungen keinen besonderen Beschränkungen. Es können alle üblicherweise bei Emulsionspolymerisationen verwendeten Monomeren eingesetzt werden.

Bevorzugt handelt es sich bei mindestens 50 Gew.-%, besonders bevorzugt bei mindestens 70 Gew.-% der insgesamt beim erfindungsgemäßen Verfahren verwendeten Monomeren um sogenannte Hauptmonomere, ausgewählt aus $C_1$-$C_{20}$-Alkyl(meth)acrylaten, Vinylestern von bis zu 20 C-Atome enthaltenden Carbonsäuren, Vinylaromaten mit bis zu 20 C-Atomen, ethylenisch ungesättigten Nitrilen, Vinylhalogeniden, Vinylethern von 1 bis 10 C-Atome enthaltenden Alkoholen, aliphatischen Kohlenwasserstoffen mit 2 bis 8 C-Atomen und 1 oder 2 Doppelbindungen oder Mischungen dieser Monomeren.

Zu nennen sind z.B. (Meth)acrylsäurealkylester mit einem $C_1$-$C_{10}$-Alkylrest, wie Methylmethacrylat, Methylacrylat, n-Butylacrylat, Ethylacrylat und 2-Ethylhexylacrylat.

Insbesondere sind auch Mischungen der (Meth)acrylsäurealkylester geeignet.

Vinylester von Carbonsäuren mit 1 bis 20 C-Atomen sind z.B. Vinyllaurat, -stearat, Vinylpropionat, Versaticsäurevinylester und Vinylacetat.

Als vinylaromatische Verbindungen kommen Vinyltoluol, $\alpha$- und p-Methylstyrol, $\alpha$-Butylstyrol, 4-n-Butylstyrol, 4-n-Decylstyrol und vorzugsweise Styrol in Betracht.

Beispiele für Nitrile sind Acrylnitril und Methacrylnitril.

Die Vinylhalogenide sind mit Chlor, Fluor oder Brom substituierte ethylenisch ungesättigte Verbindungen, bevorzugt Vinylchlorid und Vinylidenchlorid.

Als Vinylether zu nennen sind z.B. Vinylmethylether oder Vinylisobutylether. Bevorzugt werden Vinylether von 1 bis 4 C-Atome enthaltenden Alkoholen.

Als Kohlenwasserstoffe mit 2 bis 8 C-Atomen und zwei olefinischen Doppelbindungen seien Butadien, Isopren und Chloropren genannt; solche mit einer Doppelbindung sind z.B. Ethern oder Propen.

Neben diesen Hauptmonomeren können weitere Monomere, z.B. Hydroxylgruppen enthaltende Monomere, insbesondere $C_1$-$C_{10}$-Hydroxyalkyl(meth)acrylate, (Meth)acrylamid, ethylenisch ungesättigte Säuren, insbesondere Carbonsäuren, wie (Meth)acrylsäure oder Itaconsäure, und deren Anhydride, Dicarbonsäuren und deren Anhydride oder Halbester, z.B. Maleinsäure, Fumarsäure und Maleinsäureanhydrid Verwendung finden.

Besonders bevorzugte Hauptmonomere sind (Meth)acrylsäureester und vinylaromatische Verbindungen und deren Mischungen.

Bei der Emulsionspolymerisation werden ionische und/oder nichtionische Emulgatoren und/oder Schutzkolloide bzw. Stabilisatoren als grenzflächenaktive Verbindungen verwendet.

Eine ausführliche Beschreibung geeigneter Schutzkolloide findet sich in Houben-Weyl, Methoden der organischen Chemie, Band XIV/1, Makromolekulare Stoffe, Georg-Thieme-Verlag, Stuttgart, 1961, S. 411 bis 420. Als Emulgatoren kommen sowohl anionische, kationische als auch nichtionische Emulgatoren in Betracht. Vorzugsweise werden als begleitende grenzflächenaktive Substanzen ausschließlich Emulgatoren eingesetzt, deren Molekulargewichte im Unterschied zu den Schutzkolloiden üblicherweise unter 2000 g/mol liegen. Selbstverständliche müssen im Falle der Verwendung von Gemischen grenzflächeaktiver Substanzen die Einzelkomponenten miteinander verträglich sein, was im Zweifelsfall an Hand weniger Vorversuche überprüft werden kann. Vorzugsweise werden anionische und nichtionische Emulgatoren als grenzflächenaktive Substanzen verwendet. Gebräuchliche begleitende Emulgatoren sind z.B. ethoxylierte Fettalkohole (EO-Grad: 3 bis 50, Alkylrest; $C_8$- bis $C_{36}$), ethoxylierte Mono-, Di- und Tri-Alkylphenole (EO-Grad: 3 bis 50, Alkylrest: $C_4$- bis $C_9$), Alkalimetallsalze von Dialkylestern der Sulfobernsteinsäure sowie Alkali- und Ammoniumsalze von Alkylsulfaten (Alkylrest: $C_8$- bis $C_{12}$), von ethoxylierten Alkanolen (EO-Grad: 4 bis 30, Alkylrest: $C_{12}$- bis $C_{18}$), von ethoxylierten Alkylphenolen (EO-Grad: 3 bis 50, Alkylrest: $C_4$ bis $C_9$), von Alkylsulfonsäuren (Alkylrest: $C_{12}$- bis $C_{18}$) und von Alkylarylsulfonsäuren (Alkylrest: $C_9$- bis $C_{18}$).

Weitere geeignete Emulgatoren sind Verbindungen der allgemeinen Formel II

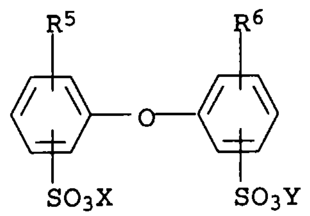

(II)

worin $R^5$ und $R^6$ Wasserstoff oder $C_4$- bis $C_{14}$-Alkyl bedeuten und nicht gleichzeitig Wasserstoff sind, und X und Y Alkalimetallionen und/oder Ammoniumionen sein können. Vorzugsweise bedeuten $R^5$, $R^6$ lineare oder verzweigte Alkylreste mit 6 bis 18 C-Atomen oder Wasserstoff und insbesondere mit 6, 12 und 16 C-Atomen, wobei $R^5$ und $R^6$ nicht beide gleichzeitig Wasserstoff sind. X und Y sind bevorzugt Natrium, Kalium oder Ammoniumionen, wobei Natrium besonders bevorzugt ist. Besonders vorteilhaft sind Verbindungen II in denen X und Y Natrium, $R^5$ ein verzweigter Alkylrest mit 12 C-Atomen und $R^6$ Wasserstoff oder $R^5$ ist. Häufig werden technische Gemische verwendet, die einen Anteil von 50 bis 90 Gew.-% des monoalkylierten Produktes aufweisen, beispielsweise Dowfax® 2A1 (Warenzeichen der Dow Chemical Company).

Geeignete Emulgatoren finden sich auch in Houben-Weyl, Methoden der organischen Chemie, Band 14/1, Makromolekulare Stoffe, Georg Thieme Verlag, Stuttgart, 1961, Seiten 192 bis 208.

Handelsnamen von Emulgatoren sind z.B. Dowfax® 2 A1, Emulan® NP 50, Dextrol® OC 50, Emulgator 825, Emulgator 825 S, Emulan® OG, Texapon® NSO, Nekanil® 904 S, Lumiten® I-RA, Lumiten E 3065 etc.

Die grenzflächenaktive Substanz wird üblicherweise in Mengen von 0,1 bis 10 Gew.-%, bezogen auf alle zu polymerisierenden Monomeren verwendet.

Wasserlösliche Initiatoren für die Emulsionspolymerisation sind z.B. Ammonium- und Alkalimetallsalze der Peroxidischwefelsäure, z.B. Natriumperoxodisulfat, Wasserstoffperoxid oder organische Peroxide, z.B. tert-Butylhydroperoxid.

Geeignet sind insbesondere sogenannte Reduktions-, Oxidations(Red-Ox)-Initiator Systeme.

Die Red-Ox-Initiator-Systeme bestehen aus mindestens einem meist anorganischem Reduktionsmittel und einem

anorganischen oder organischen Oxidationsmittel.

Bei der Oxidationskomponente handelt es sich z.B. um die bereits vorstehend genannten Initiatoren für die Emulsionspolymerisation.

Bei der Reduktionskomponenten handelt es sich z.B. um Alkalimetallsalze der schwefligen Säure, wie z.B. Natriumsulfit, Natriumhydrogensulfit, Alkalisalze der dischwefligen Säure wie Natriumdisulfit, Bisulfitadditionsverbindungen aliphatischer Aldehyde und Ketone, wie Acetonbisulfit oder Reduktionsmittel wie Hydroxymethansulfinsäure und deren Salze, oder Ascorbinsäure. Die Red-Ox-Initiator-Systeme können unter Mitverwendung löslicher Metallverbindungen, deren metallische Komponente in mehreren Wertigkeitsstufen auftreten kann, verwendet werden.

Übliche Red-Ox-Initiator-Systeme sind z.B. Ascorbinsäure/Eisen(II)sulfat/Natriumperoxidisulfat, tert-Butylhydroperoxid/Natriumdisulfit, tert-Butylhydroperoxid/Na-Hydroxymethansulfinsäure. Die einzelnen Komponenten, z.B. die Reduktionskomponente, können auch Mischungen sein z.B. eine Mischung aus dem Natriumsalz der Hydroxymethansulfinsäure und Natriumdisulfit.

Die genannten Verbindungen werden meist in Form wässerigen Lösungen eingesetzt, wobei die untere Konzentration durch die in der Dispersion vertretbare Wassermenge und die obere Konzentration durch die Löslichkeit der betreffenden Verbindung in Wasser bestimmt ist.

Im allgemeinen beträgt die Konzentration 0,1 bis 30 Gew.-%, bevorzugt 0,5 bis 2,0 Gew.-%, besonders bevorzugt 1,0 bis 10 Gew.-%, bezogen auf die Lösung.

Die Menge der Initiatoren beträgt im allgemeinen 0,1 bis 10 Gew.-%, bevorzugt 0,5 bis 5 Gew.-%, bezogen auf alle zu polymerisierenden Monomeren. Es können auch mehrere, verschiedene Initiatoren bei der Emulsionspolymerisation Verwendung finden.

Die Emulsionspolymerisation erfolgt in der Regel bei 30 bis 95, vorzugsweise 50 bis 90°C. Das Polymerisationsmedium kann sowohl nur aus Wasser, als auch aus Mischungen aus Wasser und damit mischbaren Flüssigkeiten wie Methanol bestehen. Vorzugsweise wird nur Wasser verwendet. Die Emulsionspolymerisation kann sowohl als Batchprozeß als auch in Form eines Zulaufverfahrens, einschließlich Stufen- oder Gradientenfahrweise, durchgeführt werden. Bevorzugt ist das Zulaufverfahren, bei dem man einen Teil des Polymerisationsansatzes vorlegt, auf die Polymerisationstemperatur erhitzt, anpolymerisiert und anschließend den Rest des Polymerisationsansatzes, üblicherweise über mehrere räumlich getrennte Zuläufe, von denen einer oder mehrere die Monomeren in reiner oder in emulgierter Form enthalten, kontinuierlich, stufenweise oder unter Überlagerung eines Konzentrationsgefälles unter Aufrechterhaltung der Polymerisation der Polymerisationszone zuführt.

Die Art und Weise, in der der Initiator im Verlauf der radikalischen wäßrigen Emulsionspolymerisation dem Polymerisationsgefäß zugegeben wird, ist dem Durchschnittsfachmann bekannt. Es kann sowohl vollständig in das Polymerisationsgefäß vorgelegt, als auch nach Maßgabe seines Verbrauchs im Verlauf der radikalischen wäßrigen Emulsionspolymerisation kontinuierlich oder stufenweise eingesetzt werden. Im einzelnen hängt dies in an sich dem Durchschnittsfachmann bekannter Weise sowohl von der chemischen Natur des Initiatorsystems als auch von der Polymerisationstemperatur ab. Vorzugsweise wird ein Teil vorgelegt und der Rest nach Maßgabe des Verbrauchs der Polymerisationszone zugeführt.

Zur Entfernung der Restmonomeren wird üblicherweise auch nach Ende der eigentlichen Emulsionspolymerisation, d.h. nach einem Umsatz der Monomeren von mindestens 95 %, Initiator zugesetzt.

Die einzelnen Komponenten können den Reaktor beim Zulaufverfahren von oben, in der Seite oder von unten durch den Reaktorboden zugegeben werden.

Bei den erfindungsgemäßen Verfahren wird ein Teil der insgesamt verwendeten Monomeren dem Polymerisationsprozeß in Form einer sogenannten Miniemulsion zugeführt.

Miniemulsionen sind z.B. in P.L. Tang, E.D. Sudol, C.A. Silebi und M.S. El-Aasser Journal of Applied Polymer Science, Vol. 43, 1059-1066 (1991) beschrieben.

Es handelt sich bei den Miniemulsionen um wäßrige Emulsionen von radikalisch polymerisierbaren Verbindungen (Monomere). Mit Hilfe von grenzflächenaktiven Verbindungen, z.B. ionischen oder nichtionischen Emulgatoren und/oder Schutzkolloiden sind die Monomeren in Tröpfchenform in der wäßrigen Phase emulgiert. Als grenzflächenaktive Verbindungen eignen sich die bereits oben genannten. Die Menge der grenzflächenaktiven Verbindungen beträgt vorzugsweise 0,1 bis 10, besonders bevorzugt 0,2 bis 5 Gew.-%, bezogen auf die Gewichtsmenge der emulgierten Monomeren.

Wesentliches Merkmal der Miniemulsion ist, daß in den Monomertröpfchen eine Verbindung (Co-Stabilisator) gelöst ist, deren Löslichkeit in den Monomeren mindestens doppelt, vorzugsweise mindestens fünf mal so groß ist wie die in Wasser.

Besonders bevorzugt liegt die Löslichkeit dieses Co-Stabilisators in Wasser unter 0,001 Gew.-%, ganz besonders bevorzugt unter 0,0001 Gew.-%, bezogen auf Lösung des Costabilisators in Wasser bei 25°C und die Löslichkeit in den Monomeren der Monomertröpfchen über 0,1 Gew.-%, ganz besonders bevorzugt über 1 Gew.-%, insbesondere über 10 Gew.-% bzw. über 30 Gew.-% bezogen auf die Lösung des Costabilisators in den Monomeren der Monomertröpfchen bei 25°C. Insbesondere ist der Costabilisator mit den Monomeren der Monomertröpfchen beliebig mischbar.

Beispielhaft seien folgende Stoffklassen als geeignete Co-Stabilisatoren genannt:

a) $C_8$-$C_{30}$ Alkane, insbesondere z.B. Hexadecan
b) $C_8$-$C_{30}$ Alkylacrylate, bevorzugt $C_{10}$-$C_{30}$ besonders bevorzugt $C_{12}$-$C_{30}$-Alkylacrylate
c) Polymere, z.B. radikalisch polymerisierte Polymere, Polyaddukte, wie Polyurethane, oder Polykondensate, wie Polyester.

Bevorzugt sollte auch die Viskosität der Lösung des Costabilisators in den Monomeren der Monomertröpfchen nicht zu hoch sein, die Viskosität sollte insbesonder kleiner 3000 mPas, besonders bevorzugt kleiner 1000 mPas und ganz besonders bevorzugt kleiner 500 mPas, z.B. auch kleiner 100 mPas sein.

Der Anteil dieses Co-Stabilisators beträgt bevorzugt 0,1 bis 50 Gew.-%, besonders bevorzugt 1 bis 30 Gew.-% und ganz besonders bevorzugt 2 bis 10 Gew.-%, bezogen auf die Monomeren der Miniemulsion.

Der mittlere Teilchendurchmesser der emulgierten Monomertröpfchen in den Miniemulsionen beträgt 10 bis 500 nm, vorzugsweise 50 bis 400 nm und besonders bevorzugt 100 bis 300 nm.

Es handelt sich bei diesem Teilchendurchmesser um den sog. zmittleren Teilchendurchmesser $\bar{d}_z$, welcher nach dem Prinzip der dynamischen, quasielastische Lichtstreuung bestimmt wird. Zur Bestimmung der Teilchengröße wurde ein Coulter N4 Plus Particle Analyses (Coulter Scientific Instruments) benutzt.

Die Messung wird an einer wäßrigen Emulsion, welche 0,01 Gew.-% der mit Costabilisator emulgierten Monomertröpfchen enthält, durchgeführt. Die wäßrige Emulsion enthält weiterhin in der wäßrigen Phase die entsprechenden Monomeren der emulgierten Monomertröpfchen in gelöster Form (bis zur Sättigung), damit sich die emulgierten Monomertröpfchen nicht auflösen.

Angegeben wird der mittlere Durchmesser der unimodalen Analyse der Autokorrelationsfunktion, das z-Mittel $\bar{d}_z$.

Die Herstellung von Miniemulsionen ist bekannt und z.B. in dem voranstehend genannten Artikel von P.L Tang et al. beschrieben. Es kann z.B. so verfahren werden, daß einerseits die oberflächenaktive Verbindung in Wasser und andererseits der Co-Stabilisator in den Monomeren gelöst wird. Beide Lösungen werden dann zusammengegeben und homogenisiert, wobei die gewünschte Miniemulsion erhalten wird. Für die kontinuierliche Herstellung von Miniemulsionen werden in der klassischen Verfahrenstechnik u.a. Hochdruckhomogenisatoren verwendet. Die Emulgierung der Komponenten wird in diesen Maschinen durch einen hohen lokalen Energieeintrag erzielt. In der Praxis haben sich zwei verschiedene Varianten etabliert.

Bei der ersten Variante wird die Emulsion über eine Kolbenpumpe auf über 100 bar verdichtet und anschließend durch einen engen Spalt entspannt. Die Wirkung beruht hier auf einem Zusammenspiel von hohen Scher- und Druckgradienten und Kavitation im Spalt. Ein Beispiel für einen Hochdruckhomogenisator, der nach diesem Prinzip funktioniert ist der Niro-Soavi Hochdruckhomogenisator Typ NS1001L Panda.

Bei der zweiten Variante wird die verdichtete Flüssigkeit über zwei gegeneinander gerichtete Düsen in eine Mischkammer entspannt. Die Emulgierwirkung ist hier vor allem von den hydrodynamischen Verhältnissen in der Mischkammer abhängig. Ein Beispiel hierfür ist der Microfluidizer Typ M120 E (Microfluidics Corp). In diesem Hochdruckhomogenisator wird die Emulsion mittels einer pneumatisch betriebenen Kolbenpumpe auf maximale Drücke von 1200 bar komprimiert und über eine sogenannte "interaction chamber" entspannt. In der "interaction chamber" wird der Emulsionsstrahl in einem Mikrokanalsystem in zwei Strahlen aufgeteilt, die unter 180° aufeinandergeführt werden. Ein weiteres Beispiel für diese Art der Homogenisierung ist der Naojet (Typ Expo; Nanojet Engigeering GmbH). Dieser Hochdruckhomogenisator funktioniert nach dem gleichen Prinzip wie der Microfluidizer. Allerdings sind beim Nanojet anstatt eines festen Kanalsystems zwei Homogenisierventile eingebaut, die mechanisch verstellt werden können.

Neben diesen genannten Prinzipien können Emulsionen aber auch mit Hilfe von Ultraschall (z.B. Branson Sonifier II 450) erzeugt werden. Die Zerkleinerung der Teilchen beruht hier auf Kavitationsmechanismen. Die Qualität der im Schallfeld erzeugten Emulsionen hängt aber neben der eingebrachten Schalleistung auch noch von weiteren Faktoren ab, wie z.B. der Intensitätsverteilung des Ultraschalls in der Mischkammer, der Verweilzeit, der Temperatur und den physikalischen Eigenschaften der zu emulgierenden Stoffe, beispielsweise von der Zähigkeit, Grenzflächenspannung und dem Dampfdruck. Die Teilchengröße der Monomertröpfchen hängt dabei ab von der Konzentration des Emulgators und des Co-Stabilisators sowie von der bei der Homogenisierung eingetragenen Energie und ist z.B. durch entsprechende Veränderung des Homogenisierungsdrucks bzw. der entsprechenden Ultraschallenergie gezielt einstellbar.

Bei dem erfindungsgemäßen Verfahren werden vorzugsweise 0,1 bis 10 Gew.-%, besonders bevorzugt 0,2 bis 5 Gew.-% aller zu polymerisierenden Monomeren in Form der Miniemulsion dem Polymerisationsprozeß zugeführt. Die Miniemulsion kann z.B. vorgelegt und dann die übrigen Monomeren zudosiert werden, sie kann auch während der Polymerisation zugesetzt werden.

Bevorzugt wird die Miniemulsion zugesetzt, bevor ein Umsatz von 95 % Gew.-%, besonders bevorzugt von 70 Gew.-% und ganz besonders bevorzugt von 50 Gew.-% aller zu polymerisierenden Monomeren erreicht ist.

Die Zugabe von Miniemulsionen während der Polymerisation kann kontinuierlich über einen definierten Zeitraum

oder Batchweise erfolgen. Bevorzugt wird die Miniemulsion in Form eines einzigen Batches zugegeben.

Die Monomerzusammensetzung der Miniemulsionen kann von der Zusammensetzung der nicht in Form der Miniemulsion zugeführten und/oder vorgelegten Monomeren verschieden sein.

Bei den erfindungsgemäßen Verfahren wird eine Polymerdispersion mit bimodaler Teilchengrößenverteilung erhalten. Überraschend ist, daß bei der Polymerisation eine von den übrigen Polymerteilchen unterscheidbare Polymerteilchenspecies erhalten wird, deren Teilchenzahl weitgehend der Zahl der Monomertröpfchen der Miniemulsion entspricht und deren Teilchengröße direkt von der in der Miniemulsion eingestellten Größe der Monomertröpfchen abhängt. Die Teilchengröße der Polymerteilchen läßt sich im weiteren durch die bereits bekannten und üblichen Methoden, z.B. der Mitverwendung einer Polymerisaat mit definierten Teilchengröße, welche z.B. in einer Menge von 0,05 bis 10 Gew.-%, bezogen auf die Gesamtmenge der zu polymerisierenden Monomeren, bei der Emulsionspolymerisation vorgelegt werden kann, einstellen bzw. beeinflussen.

Nach dem erfindungsgemäßen Verfahren sind Polymerdispersionen mit hohem Feststoffgehalt, z.B. über 50 Gew.-%, insbesondere über 60 Gew.-% und auch über 70 Gew.-% erhältlich. Die Polymerdispersionen haben eine geringe Viskosität, auch bei hohem Feststoffgehalt.

Besonders bevorzugte Polymerdispersionen haben eine bimodale Teilchengrößenverteilung, bei der 0,1 bis 80 Gew.-%, insbesondere 1 bis 50 des Polymeren eine Teilchengröße $\bar{d}_w$ von 20 bis 500, insbesondere von 50 bis 300 nm haben und 20 bis 99,9 Gew.-%, insbesondere 50 bis 99 Gew.-% der Polymeren eine Teilchengröße $\bar{d}_w$ von 200 bis 1500 nm, insbesondere von 300 bis 900 nm haben, wobei sich die Teilchengrößen um mindestens 50 nm, insbesondere um mindestens 100 nm ganz besonders bevorzugt um mindestens 200 nm unterscheiden. Die Meßmethode zur Bestimmung von $\bar{d}_w$ ist in den Beispielen beschrieben.

Beispiele

Prozente sind Gewichtsprozente

Herstellung der Miniemulsion

Zur Herstellung wird der Teilzulauf b) vorgelegt, Teilzulauf a) unter Rühren zugegeben, die Emulsion noch weitere 10 min normal gerührt und anschließend mit einem Hochdruckhomogenisator Niro Soavi Typ NS1001L Panda homogenisiert. Zur Homogenisierung der Emulsionen wurde ein Durchlauf bei 850 bar durchgeführt.

In den untenstehenden Beispielen wurde die Miniemulsion jeweils als Zulauf 3 zugesetzt, die Zusammensetzung der Teilzuläufe a) und b) ist unter Zulauf 3 angegeben.

Bestimmung der Teilchengröße der erhaltenen Polymerdispersion

Um die hochaufgelöste Teilchengrößenverteilung ($\bar{d}_w$) der Latexpartikel zu bestimmen, wurde eine Analytische Ultrazentrifuge eingesetzt (Teilchengrößenverteilungs-TGV-Messung). Diese Meßmethode ist von W. Mächtle in Analytical Ultracentrifugation in Biochemistry and Polymer Science, S.E. Harding et. al (Eds), Royal Society of Chemistry, Cambridge, England 1992, Chapter 10 ausführlich beschrieben.

Beispiel 1

| | | | |
|---|---|---|---|
| Vorlage: | | 458,2 g | Wasser |
| | | 4,55 g | Polystyrolsaat 33 %ig (Durchmesser 28 nm) |
| Zulauf 1: | | 488,75 g | Wasser |
| | | 10,0 g | Lumiten IRA (60 %ig), ein ... ? |
| | | 21,7 g | Dowfax 2A1 (ein Emulgator, 45 %ig in Wasser) |
| | | 15,0 g | Acrylsäure |
| | | 1485,0 g | Butylacrylat |
| Zulauf 2: | | 175,5 g | Wasser |
| | | 4,5 g | Natriumperoxodisulfat |
| Zulauf 3: | a) | 30 g | Butylacrylat |
| | | 2,4 g | Acronal A 150F, ein Harz auf Basis Poly-n-butylacrylat |
| | b) | 0,06 g | Natriumhydrogencarbonat |
| | | 0,18 g | Natriumlaurylsulfat (NLS) |
| | | 129,5 g | Wasser |
| Teilchengröße: 130 nm ($\bar{d}_z$) | | | |

Bei 85°C wurden Zulauf 1 und 2 gleichzeitig gestartet. 20 % des Zulaufs 2 wurden in 10 min zudosiert, der Rest in 2 h 20 min. Der Zulauf 1 wurde in 2 h zudosiert.
10 min nach Start der Zuläufe wurde Zulauf 3 zugefügt.

Es wurde eine bimodale Teilchengrößenverteilung erhalten, wobei
13 Gew.-% der Teilchen einen Durchmesser $\bar{d}_{w1}$ von 186 nm und
87 Gew.-% der Teilchen einen Durchmesser $\bar{d}_{w2}$ von 286 nm hatten.

Beispiel 2

| | | | |
|---|---|---|---|
| Vorlage: | | 458,2 g | Wasser |
| | | 4,55 g | Polystyrolsaat 33 %ig (Durchmesser 28 nm) |
| Zulauf 1: | | 470,34 g | Wasser |
| | | 10,0 g | Lumiten IRA (60 %ig) |
| | | 21,7 g | Dowfax 2A1 (45 %ig) |
| | | 15,0 g | Acrylsäure |
| | | 1485,0 g | Butylacrylat |
| Zulauf 2: | | 175,5 g | Wasser |
| | | 4,5 g | Natriumperoxodisulfat |
| Zulauf 3: | a) | 30 g | Butylacrylat |
| | | 2,4 g | Acronal A 150F, |
| | b) | 0,06 g | Natriumhydrogencarbonat |
| | | 0,18 g | NLS |
| | | 129,5 g | Wasser |
| Teilchengröße: 130 nm | | | |
| Zulauf 4: | | 22,5 g | Natriumdisulfit (10 %) |

Es wurde verfahren wie in Beispiel 1, mit der Ausnahme, daß 10 min nach Start der Zuläufe 1 und 2 zunächst Zulauf 4 und dann Zulauf 3 zugefügt wurde. 14 Gew.-% mit $\bar{d}_{w1}$ = 162 nm und 86 Gew.-% mit $\bar{d}_{w2}$ = 266 nm

In den folgenden Beispielen 3 bis 10 wurde gegenüber Beispiel 1 nur jeweils die Zusammensetzung des Zulaufs 3 und gegebenenfalls der anderen Zuläufe geändert bzw. die Saatvorlage variiert.

Beispiel 3

| | | | |
|---|---|---|---|
| Zulauf 3: | a) | 24 g | Styrol |
| | | 6 g | Stearylacrylat |
| | b) | 0,06 g | Natriumhydrogencarbonat |
| | | 0,18 g | NLS |
| | | 120 g | Wasser |
| Teilchengröße: 152 nm<br>Polymer: $\bar{d}_{w1}$ : 188 nm, 10 Gew.-%<br>$\bar{d}_{w2}$ : 268 nm, 90 Gew.-% | | | |

Beispiel 4

| | | | |
|---|---|---|---|
| Zulauf 3: | a) | 27,6 g | Butylacrylat |
| | | 2,4 g | Oligopropenacrylat |
| | b) | 2,4 g | Acronal A 150F |
| | | 0,06 g | Natriumhydrogencarbonat |
| | | 0,18 g | NLS |
| | | 120 g | Wasser |
| Teilchengröße: 152 nm<br>Polymer: $\bar{d}_{w1}$ : 162 nm, 18 Gew.-%<br>$\bar{d}_{w2}$ : 268 nm, 82 Gew.-% | | | |

Beispiel 5

| | | |
|---|---|---|
| Zulauf 3: | 30 g | Butylacrylat |
| | 2,4 g | Modaflow, ein Weichharz auf Polyacrylatbasis von Monsanto |
| | 0,06 g | Natriumhydrogencarbonat |
| | 0,18 g | NLS |
| | 120 g | Wasser |
| Teilchengröße: 135 nm<br>Polymer: $\bar{d}_{w1}$ : 162 nm, 14 Gew.-%<br>$\bar{d}_{w2}$ : 262 nm, 86 Gew.-% | | |

Beispiel 6

| | | | |
|---|---|---|---|
| Zulauf 3: | a) | 30 g | Butylacrylat |
| | | 1,8 g | Styrolux 684D, ein Styrol-Butadien-Blockcopolymer |
| | b) | 0,06 g | Natriumhydrogencarbonat |
| | | 0,18 g | NLS |
| | | 127 g | Wasser |
| Teilchengröße: 245 nm<br>Polymer: $\bar{d}_{w1}$ : 180 nm, 10 Gew.-%<br>$\bar{d}_{w2}$ : 276 nm, 90 Gew.-% | | | |

Beispiel 7

| | | | |
|---|---|---|---|
| Zulauf 3: | a) | 30 g | Styrol |
| | | 0,54 g | Hexadecan |
| | b) | 0,06 g | Natriumhydrogencarbonat |
| | | 0,18 g | NLS |
| | | 122 g | Wasser |
| Polymer: $\bar{d}_{w1}$ : 210 nm, 10 Gew.-%<br>$\bar{d}_{w2}$ : 276 nm, 90 Gew.-% | | | |

Beispiel 8

| | | | |
|---|---|---|---|
| Vorlage: | | 310,0 g | Wasser |
| | | 129,63 g | Polyacrylatsaat 54 %ig (Durchmesser 363 nm) |
| Zulauf 1: | | 320,17 g | Wasser |
| | | 6,7 g | Lumiten IRA (60 %ig) |
| | | 14,4 g | Dowfax 2A1 (45 %ig) |
| | | 10,0 g | Acrylsäure |
| | | 990,0 g | Butylacrylat |
| Zulauf 2: | | 1170 g | Wasser |
| | | 3,0 g | Natriumperoxodisulfat |
| Zulauf 3: | a) | 20 g | Butylacrylat |
| | | 1,76 g | Acronal A 150F |
| | b) | 0,04 g | Natriumhydrogencarbonat |
| | | 0,12 g | NLS |
| | | 86,4 g | Wasser |
| Teilchengröße: 120 nm<br>Polymer: $\bar{d}_{w1}$ : 250 nm, 50 Gew.-%<br>$\bar{d}_{w2}$ : 768 nm, 50 Gew.-% | | | |

Beispiel 9

| | | | |
|---|---|---|---|
| Vorlage: | | 210 g | Wasser |
| | | 118,64 g | Polyacrylatsaat 59 gew.-%ig (Durchmesser 366 nm) |
| Zulauf 1: | | 102,32 g | Wasser |
| | | 6,7 g | Lumiten IRA (60 %ig), |
| | | 14,4 g | Dowfax 2A1 (45 %ig) |
| | | 10,0 g | Acrylsäure |
| | | 999,0 g | Butylacrylat |
| Zulauf 2: | | 39,9 g | Wasser |
| | | 3,0 g | Natriumperoxodisulfat |
| Zulauf 3: | a) | 20,0 g | Butylacrylat |
| | | 2,4 g | Acronal DS 3435X, ein Harz auf Basis von Polybutylacrylat |
| | b) | 0,04 g | Natriumhydrogencarbonat |
| | | 0,12 g | NLS |
| | | 86,4 g | Wasser |
| Teilchengröße: 137 nm<br>Polymer: $\overline{d}_{w1}$ : 230,9 nm, 42,2 Gew.-%<br>$\overline{d}_{w2}$ : 656,8 nm, 57,8 Gew.-% | | | |

Feststoffgehalt 69 Gew.-%

Viskosität bei einer Scherrate von 250 $s^{-1}$: 660 mPa (bestimmt mit einem Contaves Rheomat 115)

Beispiel 10

<table>
<tr><td colspan="2">Vorlage:</td><td>310,0 g</td><td>Wasser</td></tr>
<tr><td colspan="2"></td><td>118,64 g</td><td>Polyacrylatsaat 59 gew.-%ig (Durchmesser 366 nm)</td></tr>
<tr><td colspan="2">Zulauf 1:</td><td>100,46 g</td><td>Wasser</td></tr>
<tr><td colspan="2"></td><td>6,7 g</td><td>Lumiten IRA (60 %ig)</td></tr>
<tr><td colspan="2"></td><td>14,4 g</td><td>Dowfax 2A1 (45 %ig)</td></tr>
<tr><td colspan="2"></td><td>10,0 g</td><td>Acrylsäure</td></tr>
<tr><td colspan="2"></td><td>999,0 g</td><td>Butylacrylat</td></tr>
<tr><td colspan="2">Zulauf 2:</td><td>39,9 g</td><td>Wasser</td></tr>
<tr><td colspan="2"></td><td>3,0 g</td><td>Natriumperoxodisulfat</td></tr>
<tr><td>Zulauf 3:</td><td>a)</td><td>20,0 g</td><td>Butylacrylat</td></tr>
<tr><td></td><td></td><td>2,4 g</td><td>Acronal DS 3435X</td></tr>
<tr><td></td><td>b)</td><td>0,04 g</td><td>Natriumhydrogencarbonat</td></tr>
<tr><td></td><td></td><td>0,12 g</td><td>NLS</td></tr>
<tr><td></td><td></td><td>86,4 g</td><td>Wasser</td></tr>
<tr><td colspan="4">Teilchengröße: 137 nm<br>$\bar{d}_{w1}$ : 245 nm, 47,4 Gew.-%<br>$\bar{d}_{w2}$ : 660 nm, 52,6 Gew.-%<br>Feststoffgehalt 65,8 Gew.-%<br>Polymer: $\bar{d}_{w1}$ : 245 nm, 47,4 Gew.-%<br>$\bar{d}_{w2}$ : 660 nm, 52,6 Gew.-%</td></tr>
</table>

Feststoffgehalt 65,8 Gew.-%
Viskosität bei einer Scherrate von 250 $s^{-1}$: 180 mPa (bestimmt mit einem Contaves Rheomat 115)

Beispiel 11

Es wurde gegenüber Beispiel 2 nur die Zusammensetzung des Zulaufs 3 geändert.

<table>
<tr><td>Zulauf 3:</td><td>24 g</td><td>Styrol</td></tr>
<tr><td></td><td>6 g</td><td>Stearylacrylat</td></tr>
<tr><td></td><td>0,06 g</td><td>Natriumhydrogencarbonat</td></tr>
<tr><td></td><td>0,18 g</td><td>NLS</td></tr>
<tr><td></td><td>120 g</td><td>Wasser</td></tr>
<tr><td colspan="3">Teilchengröße: 152 nm<br>Polymer: $\bar{d}_{w1}$ : 178 nm<br>$\bar{d}_{w2}$ : 264 nm</td></tr>
</table>

Vergleichsbeispiele

V1, V3, V6, V7

Entsprechend Beispielen 1, 3, 6 und 7 wurden Vergleichsbeispiele V1, V3, V6 und V7 durchgeführt.

Der einzige Unterschied bestand darin, daß bei der Herstellung der Miniemulsion (Zulauf 3) nicht homogenisiert wurde, so daß keine Miniemulsion entstand.

Die erhaltene Teilchengrößenverteilung der Polymerdispersion war in allen Fällen monomodal:

| | $\bar{d}_w$ |
|---|---|
| VI | 291 nm |
| V3 | 285 nm |
| V6 | 285 nm |
| V7 | 276 nm |

**Patentansprüche**

1. Verfahren zur Herstellung von wäßrigen Polymerdispersionen durch Emulsionspolymerisation von radikalisch polymerisierbaren Verbindungen (Monomere), dadurch gekennzeichnet, daß vor oder während der Polymerisation der Monomeren eine Miniemulsion zugesetzt wird, wobei es sich bei der Miniemulsion um eine wäßrige, mit einer grenzflächenaktiven Substanz stabilisierten Emulsion von Monomeren mit einer Teilchengröße der emulgierten Monomertröpfchen von 10 bis 500 nm handelt, welche eine in den Monomeren der Monomertröpfchen gelöste Verbindung (Co-Stabilisator), deren Löslichkeit in den Monomeren mindestens doppelt so groß ist wie die Löslichkeit in Wasser, enthält.

2. Verfahren gemäß Anspruch 1, dadurch gekennzeichnet, daß der Gewichtsanteil des Stabilisators 0,1 bis 50 Gew.-% , bezogen auf die Monomeren der Miniemulsion, beträgt.

3. Verfahren gemäß Anspruch 1 oder 2, dadurch gekennzeichnet, daß der Anteil der in Form der Miniemulsion zugesetzten Monomeren 0,1 bis 10 Gew.-%, bezogen auf alle zu polymerisierenden Monomeren beträgt.

4. Verfahren gemäß einen der Ansprüche 1 bis 3, dadurch gekennzeichnet, daß die Miniemulsion zugesetzt wird, bevor 95 Gew.-% aller zu polymerisierenden Monomeren polymerisiert sind.

5. Polymerdispersion, erhältlich nach einem Verfahren gemäß einem der Ansprüche 1 bis 4.

6. Polymerdispersionen mit bimodaler Teilchengrößenverteilung erhältlich nach einem Verfahren gemäß einem der Ansprüche 1 bis 4, wobei 0,1 bis 80 Gew.-% des dispergierten Polymeren in Form von Polymerteilchen mit einer mittleren Teilchengröße von 20 bis 500 nm und 20 bis 99,9 Gew.-% des dispergierten Polymeren in Form von Polymerteilchen mit einer mittleren Teilchengröße von 200 bis 1500 nm vorliegen, wobei sich die mittleren Teilchengrößen um mindestens 50 unterscheiden.

Europäisches Patentamt

# EUROPÄISCHER RECHERCHENBERICHT

Nummer der Anmeldung
EP 97 11 0747

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| X | GB 2 138 830 A (POLYSAR LTD.)<br>* Anspruch 1 *<br>--- | 1-6 | C08F2/22<br>C09D157/00 |
| A | US 4 254 004 A (K. ABBEY)<br>----- | | |

| RECHERCHIERTE SACHGEBIETE (Int.Cl.6) |
|---|
| C08F |

Der vorliegende Recherchenbericht wurde für alle Patentansprüche erstellt

| Recherchenort | Abschlußdatum der Recherche | Prüfer |
|---|---|---|
| DEN HAAG | 22.September 1997 | Cauwenberg, C |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
& : Mitglied der gleichen Patentfamilie, übereinstimmendes Dokument

EPO FORM 1503 03.82 (P04C03)